# EUROPÄISCHE PATENTANMELDUNG

(11) **EP 2 383 446 A1**
(43) Veröffentlichungstag der Anmeldung: **02.11.2011**
(21) Anmeldenummer: 11158600.4
(22) Anmeldetag: 17.03.2011
(51) Int. Cl.: F01N 13/18, F01N 13/10, F16B 11/00, F16B 41/00, F16B 43/00

(54) **Baugruppe zur Befestigung eines Abgaskrümmers an einem Zylinderkopf sowie Motoreinheit**

(30) Priorität: 27.04.2010 DE 102010018345
(71) Anmelder: Bayerische Motoren Werke Aktiengesellschaft, 80809 München (DE)
(72) Erfinder: Kastenhuber, Thomas, 4490, St. Florian (AT)

(57) **Zusammenfassung**

Eine Baugruppe zur Befestigung eines Abgaskrümmers (14) an einem Zylinderkopf (12) und zur Schaffung einer Motoreinheit weist eine Mutter (22) auf, die auf einer dem Zylinderkopf (12) abgewandten Seite des Abgaskrümmers (14) angeordnet ist und eine zwischen der Mutter (22) und dem Abgaskrümmer (14) angeordneten Unterlegscheibe (24). Vor einer Erstmontage ist die Unterlegscheibe (24) verliersicher mit der Mutter (22) verbunden.

## Beschreibung

Die Erfindung betrifft eine Baugruppe zur Befestigung eines Abgaskrümmers an einem Zylinderkopf einer Verbrennungskraftmaschine sowie eine Motoreinheit mit Zylinderkopf und Abgaskrümmer.

Üblicherweise wird der Abgaskrümmer am Zylinderkopf mittels in den Zylinderkopf eingedrehten Schraubbolzen und auf diese aufgedrehten Flanschmuttern befestigt. Diese Verbindung Krümmer zur Zylinderkopf muss so dicht sein, dass keinerlei Abgase aus dem Zylinderkopf in die Umgebung austreten können. Die Anlagefläche der Muttern am Abgaskrümmer kann durch eine Planfräsung bearbeitet werden oder auch unbearbeitet, d.h. ohne spanende Bearbeitung, bleiben, was die Kosten reduziert, jedoch die Haltbarkeit der Verschraubung verschlechtert.

Aufgrund der thermischen Ausdehnungsbewegung des Abgaskrümmers im Betrieb wird ein Losdrehmoment auf die Verschraubung aufgebracht, sodass dieser Tendenz entgegengewirkt werden muss.

Aufgabe der Erfindung ist es, eine einfache und kostengünstige Lösung vorzustellen, mit der die Muttern gegen Lösen gesichert sind.

Erfindungsgemäß ist hierzu bei einer Baugruppe zur Befestigung eines Abgaskrümmers an einem Zylinderkopf vorgesehen, dass auf einer dem Zylinderkopf abgewandten Seite des Abgaskrümmers eine zwischen der Mutter und dem Abgaskrümmer angeordnete Unterlegscheibe vorgesehen ist, wobei vor einer Erstmontage die Unterlegscheibe verliersicher mit der Mutter verbunden ist. Dadurch wird die Montage erleichtert, die Unterkopfreibung an der Mutter reduziert und die zentrierte Ausrichtung von Mutter und Unterlegscheibe zumindest beim Anziehen der Mutter sichergestellt.

Gemäß der bevorzugten Ausführungsform ist vorgesehen, dass nach der Montage in Umfangsrichtung keine Verbindung mehr wirksam ist.

Vorzugsweise ist die Verbindung so ausgebildet, dass sie bei der Erstmontage der Mutter am Abgaskrümmer zerstörbar ist. Auf diese Weise wird die Zahl der zu verbauenden Bauteile nicht erhöht, da bei der Erstmontage die Unterlegscheibe an der Mutter befestigt ist und im Anfangsstadium eine Relativdrehung von Mutter und Unterlegscheibe verhindert wird. Im Betrieb, wo eine Relativbewegung zwischen der Unterlegscheibe und der Mutter aufgrund der Längsverschiebung durch thermomechanische Ausdehnung des Krümmers erwünscht ist, besteht aufgrund der dann gelösten Verbindung keine Bewegungseinschränkung zwischen Unterlegscheibe und Mutter mehr.

Es hat sich überraschenderweise herausgestellt, dass durch diese einfache Maßnahme die Losdrehtendenz deutlich verringert werden kann, während Montagezeiten und Baukosten gering gehalten werden können.

Vorzugsweise ist die Unterlegscheibe mit der Mutter verklebt.

Die Verklebung zwischen Mutter und Unterlegscheibe ist bevorzugt so ausgebildet, dass sie durch die im Betrieb des Abgaskrümmers entstehende Hitze zerstört wird. Beispielsweise kann die Verklebung so ausgelegt sein, dass sie im Betrieb durch die Motorhitze verdampft. Auf diese Weise lässt sich die Befestigung zwischen Unterlegscheibe und Mutter ohne weitere Bearbeitung automatisch im Wesentlichen rückstandsfrei entfernen. Darüber hinaus besteht nur noch ein direkter Kontakt zwischen Mutter und Unterlegscheibe, wodurch sehr exakt vorbestimmbare Reibkräfte auftreten.

Gemäß einer anderen Alternative sind die Unterlegscheibe und die Mutter vor der Erstmontage formschlüssig miteinander verbunden, insbesondere durch Verbördeln.

In allen Fällen bewirkt die verliersichere Verbindung der Unterlegscheibe mit der Mutter vor der Erstmontage auch eine gesicherte Zentrierung der Unterlegscheibe bezüglich der Mutter und bezüglich des Stiftbolzens.

Nach einer bevorzugten Ausführungsform der Erfindung weisen die Mutter und die Unterlegscheibe aufeinander abgestimmte gewölbte Oberflächen auf.

Dabei sind die gewölbten Oberflächen vorzugsweise als sphärische Kugelflächen ausgeführt. Durch das Vorsehen derartiger gewölbter Oberflächen kann bei der Erstverschraubung ein Ausgleich der Schrägstellung der Mutterauflagefläche am Abgaskrümmer erfolgen, die bei unbearbeiteten Mutternauflageflächen insbesondere durch eine Guss-Ausformschräge gegeben ist. Dadurch reduziert sich die elastische Biegebeanspruchung der Stiftbolzen annähernd auf Null, und es wird eine gleichmäßige Pressung der Mutter an der Anlagefläche am Abgaskrümmer über den gesamten Mutternumfang erreicht. Somit werden auch die bei thermischer Längenausdehnung des Krümmers wirkenden Kräfte auf die Mutter, die ein Losdrehmoment erzeugen könnten, signifikant reduziert.

Die Mutter kann beispielsweise eine Pendelmutter oder eine Kugelbundmutter sein.

Es ist möglich, eine zweite Unterlegscheibe vorzusehen, die zwischen der ersten Unterlegscheibe und dem Abgaskrümmer angeordnet ist und die vor der Erstmontage verliersicher mit der ersten Unterlegscheibe verbunden ist. In diesem Fall ist eine weitere Ausgleichsmöglichkeit gegeben, so dass die durch die thermische Ausdehnung entstehenden Kräfte noch besser verteilt werden können und noch geringere Losdrehmomente entstehen.

Die zweite Unterlegscheibe kann vor der Montage durch Verkleben oder Verbördeln an der ersten Unterlegscheibe befestigt sein, so dass die gesamte Baugruppe als ein Bauteil montiert werden kann.

Die Erfindung lässt sich besonders gut in einer Motoreinheit mit einem Zylinderkopf, einem am Zylinderkopf befestigten Abgaskrümmer und zylinderkopfseitigen Schraubbolzen einsetzen, wobei auf die Schraubbolzen jeweils eine Baugruppe aufgedreht ist, wie sie oben beschrieben wurden.

Bei der Motoreinheit besitzt der Abgaskrümmer z.B. eine unbearbeitete und/oder zu seiner zylinderkopfseitigen Anlageebene schräge Auflagefläche für die Unterlegscheibe, so dass einerseits eine gleichmäßige Mutternauflage durch die Erfindung geschaffen wird, als auch die Unterkopfreibung reduziert und auch eine Relativdrehung der Mutter im Betrieb auf einfache Weise verhindert wird.

Weitere Merkmale und Vorteile der Erfindung ergeben sich aus der nachfolgenden Beschreibung zweier Ausführungsbeispiele, mit Bezug auf die beigefügten Zeichnungen. In diesen zeigen:
- Figur 1 eine schematische Ansicht einer erfindungsgemäßen Motoreinheit mit einem Zylinderkopf, einem Abgaskrümmer und erfindungsgemäßen Baugruppen zur Befestigung des Abgaskrümmers am Zylinderkopf;
- Figur 2 eine schematische perspektivische Schnittansicht einer erfindungsgemäßen Baugruppe gemäß einer ersten Ausführungsform; und
- Figur 3 eine schematische perspektivische Ansicht einer erfindungsgemäßen Baugruppe gemäß einer zweiten Ausführungsform.

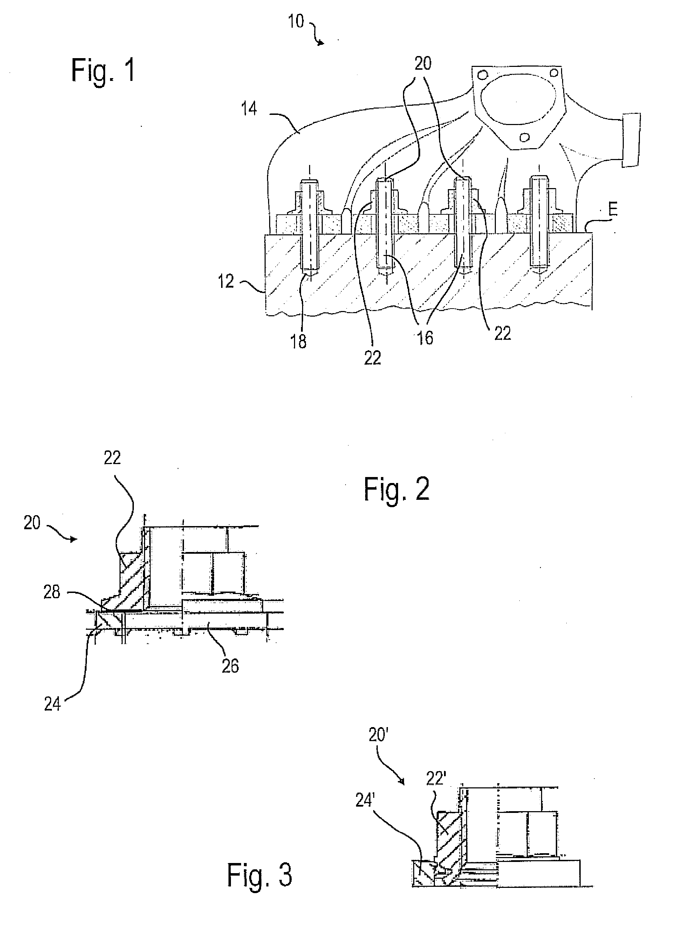

Figur 1 zeigt eine Motoreinheit 10 mit einem hier ansatzweise gezeigten Zylinderkopf 12 und einem daran befestigten Abgaskrümmer 14. Der Abgaskrümmer 14 ist am Zylinderkopf 12 über mehrere Schraubbolzen 16 befestigt, die in regelmäßigen Abständen entlang der Länge des Zylinderkopfs 12 vorgesehen sind und die jeweils in eine mit einem Gewinde versehene Ausnehmung 18 im Zylinderkopf 12 eingeschraubt sind und sich durch den Flansch des Abgaskrümmers 14 erstrecken.

Von einer dem Zylinderkopf 12 abgewandten Seite des Abgaskrümmers 14 her ist jeweils eine Baugruppe 20 mit einer Mutter 22 und einer zwischen Mutter 22 und Abgaskrümmer 14 angeordneten Unterlegscheibe 24 auf den Schraubbolzen 16 aufgedreht (siehe auch Figuren 2 bis 5). Die Schraubbolzen 16 und die Baugruppen 20 befestigen zusammen den Abgaskrümmer 14 am Zylinderkopf 12.

Der Abgaskrümmer 14 hat auf der seiner zylinderkopfseitigen Anlageebene E entgegengesetzten Seite unbearbeitete und zur Anlageebene schräge Auflageflächen für die Unterlegscheiben 24.

Vor der Erstmontage auf den Schraubbolzen 16 ist die Baugruppe 20 verliersicher zusammengehalten, indem Mutter 22 und Unterlegscheibe 24 aneinander befestigt sind.

Unterlegscheibe 24 und Mutter 22 sind so angeordnet, dass ihre zentralen Öffnungen 26 zentriert übereinanderliegen. Die Unterlegscheibe 24 weist dabei eine größere zentrale Öffnung 26 auf als die Mutter 22.

Die Befestigung der Unterlegscheibe 24 an der Mutter 22 kann wie in Figur 2 dargestellt durch eine Verklebung 28 realisiert sein, die zwischen der Unterseite der Mutter 22 und der Oberseite der Unterlegscheibe 24 aufgebracht ist. Die Verklebung 28 ist so ausgelegt, dass sie während der Erstmontage gelöst wird und im folgenden Betrieb durch die Motorhitze im Wesentlichen vollständig verdampft. Sie bewirkt jedoch bei der Erstmontage ein einfacheres Handling der Baugruppe 20 und sorgt außerdem für eine exakte Zentrierung der Unterlegscheibe 24 um den Schraubbolzen 16.

Es wäre auch möglich, die Verbindung zwischen Unterlegscheibe 24 und Mutter 22 auf andere Weise, beispielsweise eine formschlüssige Verbindung wie etwa durch Verbördeln zu realisieren. Auch diese Verbindung kann so ausgelegt sein, dass sie bei der Erstmontage gelöst wird.

In Figur 3 ist eine zweite Ausführungsform der Baugruppe 20' dargestellt. Wie in Figur 3 zu erkennen ist, sind hier die einander zugewandten Oberflächen von Mutter 22 und Unterlegscheibe 24 mit aufeinander abgestimmten Wölbungen ausgebildet, in diesem Fall in Form von Kugelschalenabschnitten. Dies erlaubt es, eine geringe Formschräge in der Anlagefläche am Abgaskrümmer 14 auszugleichen, indem sich die Mutter 22' entlang der vorzugsweise komplementär gewölbten Oberfläche der Unterlegscheibe 24' verschieben kann.

Die Mutter 22' kann in Form einer Pendelmutter oder Kugelbundmutter realisiert sein.

Die vor der Erstmontage zwischen Unterlegscheibe 24' und Mutter 22' bestehende Verbindung lässt sich, wie für die erste Ausführungsform geschildert, durch eine Verklebung verwirklichen oder, wie hier gezeigt, durch eine Verbördelung.

Optional kann zusätzlich zur Verbördelung noch eine Verklebung erfolgen.

In einer dritten (nicht dargestellten) Ausführungsform wird die in Figur 3 gezeigte Baugruppe 20' mit einer weiteren Unterlegscheibe, vorzugsweise in Form einer Unterlegscheibe 24 wie sie in Figur 2 gezeigt ist, kombiniert. Dabei wird die zweite Unterlegscheibe vor der Erstmontage verliersicher durch Verkleben oder Verbördeln an der ersten Unterlegscheibe, die mit der Mutter verbunden ist, befestigt.

Durch die hier gezeigten Baugruppen zur Befestigung des Abgaskrümmers 14 am Zylinderkopf 12 wird der inhomogene Reibungseinfluss der Oberfläche des Abgaskrümmers 14 reduziert. Auf diese Weise lässt sich eine Steigerung der Betriebssicherheit bei gleichzeitiger Kostenreduktion erreichen, da eine Leckage durch mangelnde Pressung der Dichtung zwischen Zylinderkopf 12 und Abgaskrümmer 14 verhindert wird, jedoch auf eine kostenaufwendige mechanische Bearbeitung der gegossenen Anlageflächen am Abgaskrümmer 14 verzichtet werden kann.

## Patentansprüche

1. Baugruppe zur Befestigung eines Abgaskrümmers (14) an einem Zylinderkopf (12), mit
einer Mutter (22; 22'), die auf einer dem Zylinderkopf (12) abgewandten Seite des Abgaskrümmers (14) angeordnet ist, und
einer zwischen der Mutter (22; 22') und dem Abgaskrümmer (14) angeordneten Unterlegscheibe (24; 24'),
wobei vor einer Erstmontage die Unterlegscheibe (24; 24') verliersicher mit der Mutter (22; 22') zu einer Einheit verbunden ist.

2. Baugruppe nach Anspruch 1, **dadurch gekennzeichnet, dass** die Verbindung so ausgebildet ist, dass sie bei der Erstmontage der Mutter (22; 22') am Abgaskrümmer (14) zerstörbar ist

3. Baugruppe nach Anspruch 2, **dadurch gekennzeichnet, dass** die Unterlegscheibe (24; 24') mit der Mutter (22; 22') verklebt ist.

4. Baugruppe nach Anspruch 3, **dadurch gekennzeichnet, dass** die Verklebung (28) zwischen Mutter (22; 22') und Unterlegscheibe (24; 24') so ausgebildet ist, dass sie durch die im Betrieb des Abgaskrümmers (14) entstehende Hitze zerstört wird.

5. Baugruppe nach Anspruch 4, **dadurch gekennzeichnet, dass** die Verklebung (28) so ausgelegt ist, dass sie im Betrieb durch die Motorhitze verdampft.

6. Baugruppe nach einem der vorhergehenden Ansprüche, **dadurch gekennzeichnet, dass** die Unterlegscheibe (24') und die Mutter (22') formschlüssig miteinander verbunden sind, insbesondere durch Verbördeln.

7. Baugruppe nach einem der vorhergehenden Ansprüche, **dadurch gekennzeichnet, dass** die Mutter (22') und die Unterlegscheibe (22') aufeinander abgestimmte gewölbte Oberflächen aufweisen.

8. Baugruppe nach Anspruch 7, **dadurch gekennzeichnet, dass** die Mutter (22') eine Pendelmutter oder eine Kugelbundmutter ist.

9. Baugruppe nach einem der Ansprüche 7 und 8, **dadurch gekennzeichnet, dass** eine zweite Unterlegscheibe vorgesehen ist, die zwischen der ersten Unterlegscheibe (24; 24') und dem Abgaskrümmer (14) angeordnet ist und die vor der Erstmontage verliersicher mit der ersten Unterlegscheibe (24; 24') verbunden ist.

10. Baugruppe nach Anspruch 9, **dadurch gekennzeichnet, dass** die zweite Unterlegscheibe vor der Erstmontage durch Verkleben oder Verbördeln an der ersten Unterlegscheibe (24; 24') befestigt ist.

11. Motoreinheit mit einem Zylinderkopf (12), einem am Zylinderkopf (12) befestigten Abgaskrümmer (14) und zylinderkopfseitigen Schraubbolzen (16), auf die Baugruppen (20; 20') nach einem der vorherigen Ansprüche aufgedreht sind.

12. Motoreinheit nach Anspruch 11, **dadurch gekennzeichnet**, der Abgaskrümmer (14) eine unbearbeitete und/oder zu seiner zylinderkopfseitigen Anlageebene schräge Auflagefläche für die Unterlegscheibe (24; 24') aufweist.
